# FASCICULE DE BREVET EUROPEEN

(11) **EP 1 152 609 B1**
(45) Date de publication et mention de la délivrance du brevet: **05.10.2011**
(21) Numéro de dépôt: 01400983.1
(22) Date de dépôt: 17.04.2001
(51) Int. Cl.: H04N 5/782

(54) **Dispositif d'enregistrement de signaux vidéo télécommandé par un réseau de télécommunication**
Über ein Fernmeldenetzwerk ferngesteuerte Videosignal-Aufnahmeanlage
Video signal recording arrangement, remotely controlled by means of a telecommunications network

(30) Priorité: 26.04.2000 FR 0005330
(43) Date de publication de la demande: 07.11.2001
(73) Titulaire: SAGEMCOM BROADBAND SAS, 92500 Rueil Malmaison (FR)
(72) Inventeur: Meulle, Philippe, 78300 Poissy (FR)
(74) Mandataire: Schmit, Christian Norbert Marie

(56) Documents cités:
- EP-A- 0 805 594
- WO-A-96/13933
- DE-A- 4 434 044
- DE-A- 19 740 079
- DE-A- 19 743 367

## Description

L'invention se rapporte à un dispositif d'enregistrement de signaux issus d'un flux audio et vidéo télécommandé par un réseau de télécommunication. Plus précisément, l'invention concerne un dispositif qui reçoit depuis des opérateurs de télévision un ensemble de signaux audio et vidéo, et qui est susceptible de recevoir via un réseau de télécommunication un ensemble d'instructions destiné à paramétrer le dispositif pour que celui-ci procède à l'enregistrement de certaines émissions. Par émission, il faut comprendre un ensemble de signaux audio et vidéo émis par un opérateur donné pendant un intervalle de temps ininterrompu.

Le dispositif selon l'invention peut être mis en place dans différents appareils qui possèdent des moyens de réception de signaux télévisuels, tels que par exemple une télévision numérique ou un décodeur numérique. La présente description se fera essentiellement dans le cadre où le dispositif selon l'invention est un décodeur numérique. Mais il est évident que l'ensemble des moyens mis en oeuvre dans le dispositif selon l'invention peuvent être disposés dans un autre appareil du type téléviseur ou magnétoscope.

Les décodeurs numériques sont aujourd'hui équipés d'un module de mémoire, ou disque dur, qui a une capacité de stockage d'une quantité d'informations audio et vidéo pouvant atteindre quelques heures. Ce module de mémoire est utilisé notamment pour une fonction dite de vidéo différée: lorsqu'un téléspectateur regarde une émission de télévision qu'il reçoit via un décodeur numérique, la fonction de vidéo différée lui permet de s'absenter momentanément et de déclencher manuellement une opération d'enregistrement sur le disque dur de l'émission qu'il est en train de visualiser. Lorsqu'il revient à sa position de téléspectateur, la fonction de vidéo différée lui permet de reprendre le cours de l'émission là où il l'avait quittée grâce à une lecture du disque dur. Simultanément à la lecture du disque dur, les signaux audio et vidéo correspondant à la diffusion directe de l'émission sont également mémorisés dans le disque dur. Ainsi, à un instant T1, le décodeur numérique permet la visualisation d'une émission, ou d'une partie d'une émission, qui a été diffusée à un instant T0 antérieur tout en assurant la mémorisation sur le disque dur du cours de l'émission transmis à cet instant T1. Les informations enregistrées à l'instant T1 seront alors visualisées par le téléspectateur à un instant T2 ultérieur. Une application de gestion des opérations d'écriture et de lecture du disque dur permet ainsi de visualiser sans interruption ni discontinuité une émission de télévision avec un léger décalage dans le temps. Un des intérêts d'un tel dispositif d'enregistrement est que l'utilisateur n'a pas à se soucier de la présence du support d'enregistrement dans le dispositif.

Par ailleurs, les décodeurs numériques sont aujourd'hui équipés d'interfaces spécifiques qui leur permettent de communiquer avec le monde extérieur. Ainsi, par exemple, il est aujourd'hui possible de recevoir des messages du réseau Internet via son décodeur numérique. A cet effet, ce dernier possède une adresse Internet et mémorise les messages qu'il reçoit dans une mémoire spécifique. L'utilisateur du décodeur a la possibilité de consulter les messages sur un écran de télévision qui est relié au décodeur numérique.

Il n'existe cependant pas d'interactivité entre les applications liées aux possibilités de télécommunication du décodeur numérique et les applications liées à l'enregistrement sur le disque dur du flux des signaux audio et vidéo. Par ailleurs, la fonction de vidéo différée n'est utilisable que pour un téléspectateur qui est proche de son poste de télévision et de son décodeur, et qui s'absente quelques instants pendant l'émission en déclenchant manuellement, éventuellement au moyen d'une télécommande, la fonction de vidéo différée. S'il rate le début de l'émission, celui-ci ne peut plus être récupéré car le téléspectateur n'était pas face à son décodeur pour déclencher la fonction de vidéo différée au moment où l'émission a débuté.

Le dispositif selon l'invention a pour premier objectif de permettre à un utilisateur d'un décodeur numérique d'utiliser la fonction de vidéo différée pour mémoriser le début d'une émission lorsqu'il arrive trop tard devant son décodeur numérique pour déclencher manuellement cette application. D'une façon plus générale, le dispositif selon l'invention répond au besoin de pouvoir télécommander à distance, autrement qu'au moyen d'une simple télécommande à émission infrarouge dont la portée est très limitée, la programmation d'un appareil capable d'enregistrer un flux d'informations audio et/ou vidéo. Elle permet également de déclencher automatiquement un enregistrement, sous certaines conditions, lorsqu'un utilisateur est éloigné de l'appareil d'enregistrement. Elle entre dans le cadre général d'une synergie entre le domaine des télécommunications et le domaine de la télévision numérique.

A cet effet, le dispositif selon l'invention utilise un réseau de télécommunication connecté à l'appareil d'enregistrement, par exemple via les interfaces de télécommunication déjà présentes pour recevoir les messages Internet. Un ensemble d'informations appropriées, qui est classiquement constitué du numéro de la chaîne à enregistrer, de l'heure de début et de l'heure de fin d'enregistrement, ainsi qu'éventuellement du jour d'enregistrement peuvent ainsi être envoyés à distance vers une mémoire spécifique de l'appareil d'enregistrement via un réseau de télécommunication. Ces informations sont des paramètres qui peuvent déclencher une opération d'enregistrement de façon différée sur le disque dur de l'appareil d'enregistrement. Dans un autre cas de figure, une information de localisation d'un utilisateur peut être envoyée, via le réseau de télécommunication considéré, vers l'appareil d'enregistrement pour éventuellement déclencher instantanément une opération d'enregistrement. Le dispositif selon l'invention permet de mettre en oeuvre différents procédés de programmation à distance d'opérations d'enregistrement immédiat ou différé en utilisant un réseau de télécommunication. De tels procédés sont déjà connus du document WO-A-9613933.

L'invention concerne donc un dispositif d'enregistrement de signaux issus d'un flux audio et vidéo dans un appareil de réception d'informations audio et vidéo tel que défini dans la revendication 1.

Le réseau de télécommunication utilisé pour la programmation du dispositif peut par exemple être un réseau de radiotéléphonie cellulaire du type GSM, ou le réseau Internet. Les moyens de programmation distants peuvent être par exemple des ordinateurs ou des combinés mobiles. Le dispositif selon l'invention propose en outre un ensemble de moyens pour faciliter les opérations de programmation à distance de l'appareil d'enregistrement. Différents critères d'identification de l'utilisateur du dispositif sont également mis en place dans le dispositif selon l'invention, afin de sécuriser le fonctionnement du dispositif en limitant le nombre de personnes autorisées à paramétrer à distance le décodeur numérique en vue d'un enregistrement.

L'invention et ses différentes applications seront mieux comprises à la lecture de la description qui suit et à l'examen de la figure qui l'accompagne. Celle-ci n'est présentée qu'à titre indicatif et nullement limitatif de l'invention.

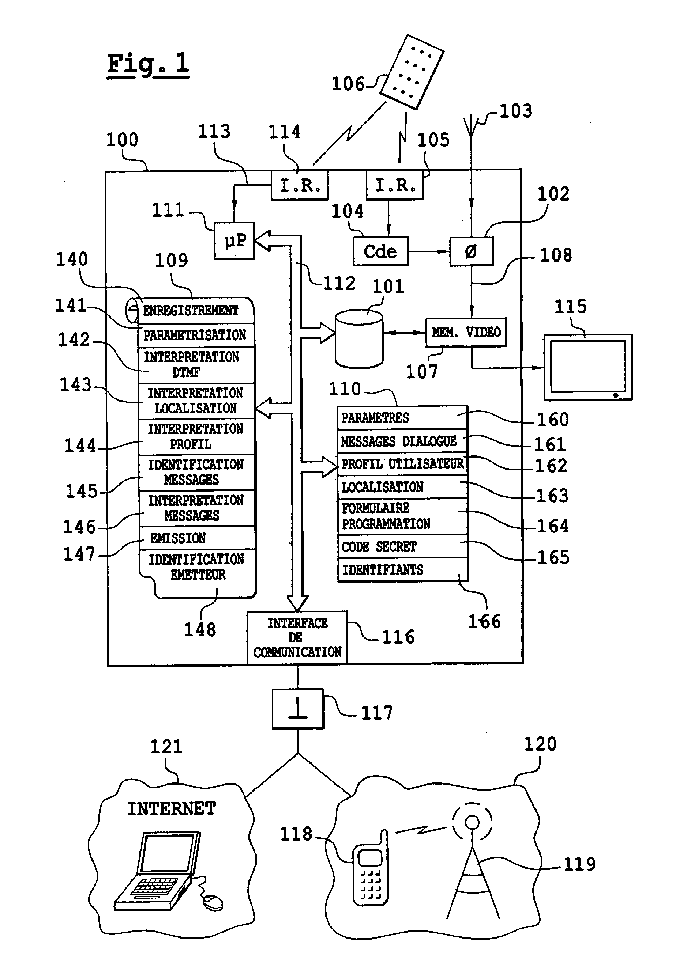

La figure 1 montre une structure envisagée pour la réalisation du dispositif selon l'invention.

La figure 1 montre un dispositif 100 d'enregistrement de signaux issus d'un flux audio et vidéo selon l'invention. Sur cette figure, le dispositif 100 est confondu avec l'appareil de réception d'informations audio et vidéo qui est ici un décodeur numérique, c'est-à-dire qu'il possède notamment un module de mémoire, ou disque dur, 101 qui est susceptible de mémoriser pendant plusieurs heures un flux de signaux audio et vidéo. Le dispositif 100 comporte un module de réception 102 de signaux télévisuels qui reçoit via une antenne 103 un flux d'informations de programmes de télévision émis par différents opérateurs de télévision. Le module de réception 102 pourrait également être connecté à un réseau de télévision câblée ou à un système de réception par satellite. Par ailleurs, le module de réception 102 est connecté à un circuit de commande 104 du module de réception 102. Le circuit de commande 104 indique au module de réception 102 quel programme de télévision il doit extraire du flux d'informations qu'il reçoit par l'antenne 103. Le module de réception 102 se charge également d'effectuer les opérations de démodulation, de décompression et de conversion nécessaires pour l'affichage d'une image de télévision. Un premier capteur 105, dans cet exemple infrarouge, reçoit des signaux émis par une télécommande 106. Une cellule infrarouge du premier capteur 105 délivre un signal qui permet à l'utilisateur de contrôler le circuit de commande 104. Dans le cadre d'une réception analogique traditionnelle, il s'agit de l'accord d'un oscillateur du module de réception 102 sur la fréquence de la porteuse qui porte les informations du programme de télévision qui doit être extrait. Les signaux analogiques reçus sont numérisés au sein du module de réception 102. Les signaux numérisés issus du module de réception 102 sont envoyés dans une mémoire vidéo 107 via une liaison unidirectionnelle 108.

La mémoire vidéo 107 est connectée avec le disque dur 101 de telle sorte que ces deux éléments peuvent échanger des signaux de données entre eux. Dans certains modes de réalisation, un module de compression et de décompression est disposé entre le disque dur 101 et la mémoire vidéo 107. Ce module permet de compresser les données destinées au disque dur afin d'économiser l'espace mémoire disponible sur ce disque. Les données qui sont transmises depuis le disque dur vers la mémoire vidéo sont alors décompressées pour pouvoir être affichées sur un écran de télévision.

Une mémoire de programmes 109 comprend notamment un ensemble d'applications destinées à la gestion des différentes opérations et options intervenant dans la programmation d'une émission de télévision au moyen du dispositif selon l'invention. Chacune de ces applications pourrait être remplacée par un circuit électronique spécifique dans différents modes de réalisation du dispositif selon l'invention. Une mémoire de données 110 permet notamment de mémoriser un ensemble de paramètres qui interviennent dans les différentes opérations de programmation du dispositif selon l'invention. La mémoire de données 110 peut également être comprise dans le disque dur 101.

Un microprocesseur 111 est relié au moyen d'un bus bidirectionnel de communication 112 à la mémoire de programmes 109, à la mémoire de données 110 et au disque dur 101. Le microprocesseur gère notamment l'ensemble des opérations intervenant dans les différentes opérations de programmation du dispositif selon l'invention. Il est par ailleurs relié au moyen d'une liaison unidirectionnelle 113 à un deuxième capteur 114 qui est de préférence semblable au premier capteur 105. Les deux capteurs 105 et 114 peuvent recevoir des signaux de la même télécommande 106. Le bus de communication bidirectionnel 112 véhicule des signaux de commande, d'adresse ou de donnée. Le dispositif 100 est connecté à un téléviseur 115 qui reçoit depuis la mémoire vidéo 107 l'ensemble des informations nécessaires à l'affichage d'une image et à la restitution d'un son. Une interface de communication 116, également connectée au bus bidirectionnel de communication, permet au dispositif 100 de se connecter à un réseau de télécommunication.

Le fonctionnement du dispositif selon l'invention est à présent expliqué.

Quand un utilisateur du décodeur numérique 100 souhaite utiliser les capacités d'enregistrement du disque dur 101, il met en oeuvre la fonction de vidéo différée par l'activation d'une application 140, dite application d'enregistrement, de la mémoire de programmes 109, par exemple au moyen de la télécommande 106, via le deuxième capteur 114, ou de touches spécifiques disposées sur le décodeur numérique. L'application d'enregistrement 140 permet le transfert de données depuis la mémoire vidéo 107 vers le disque dur 101. L'application d'enregistrement 140 peut être déclenchée instantanément par l'utilisateur ou être déclenchée suite à une programmation préalablement effectuée par l'utilisateur. A cet effet, une application 141, dite application de paramétrisation, de la mémoire de programmes 109 est mise en oeuvre. L'application de paramétrisation permet à l'utilisateur de mémoriser dans une unité de paramètres 160 de la mémoire de données 110 l'ensemble des informations nécessaires à un déclenchement ultérieur de l'application d'enregistrement 140. Ces informations comportent notamment un ensemble de paramètres indiquant le numéro de la chaîne à enregistrer, ainsi que l'heure de début et de fin de programmation et éventuellement le jour de programmation. Ces paramètres sont interprétables par l'application d'enregistrement 140 qui est alors déclenchée en temps voulu.

Selon l'invention, l'application de paramétrisation 141 et l'application d'enregistrement 140 peuvent être déclenchées à distance via un réseau de télécommunication auquel le décodeur numérique 100 est connecté via son interface de communication 116. L'interface de communication 116 est connectée à une prise téléphonique 117. Elle comporte en outre un modem qui permet de numériser les signaux reçus via la prise téléphonique 117, afin que ces signaux puissent circuler sur le bus bidirectionnel de communication 112 et être interprétés par le microprocesseur 111 et par les différentes applications de la mémoire de programmes 109.

Dans un premier exemple de réalisation de l'invention, le réseau de télécommunication utilisé pour programmer à distance le décodeur numérique est un réseau de radiotéléphonie cellulaire 120, par exemple du type GSM, accessible par un utilisateur au moyen d'un combiné mobile 118. Dans cet exemple de réalisation, un utilisateur a tout d'abord la possibilité de composer sur le combiné mobile 118 appartenant au réseau de radiotéléphonie cellulaire considéré un numéro de téléphone spécifique au décodeur numérique 100. Une application 142, dite application d'interprétation DTMF (Digital Touch Mobile Frequency dans la littérature anglaise), de la mémoire de programmes 109 est alors activée. L'application d'interprétation DTMF 142 assure la conversion des signaux que l'utilisateur du combiné mobile 118 émet par des pressions sur des touches de son combiné en un ensemble de paramètres acceptés par l'application de paramétrisation 141.

Selon un premier mode de mise en oeuvre du dispositif selon l'invention, l'application d'interprétation DTMF 142 fait appel à une unité de mémoire 161, dite unité de messages de dialogue, de la mémoire de données 110. La mémoire de messages de dialogue 161 contient des messages vocaux préenregistrés qui aident l'utilisateur dans son opération de programmation du décodeur numérique. Ces messages vocaux sont du type : "sélectionner la chaîne", " sélectionner l'heure de début", "sélectionner l'heure de fin"... L'application d'interprétation DTMF et la mémoire de messages de dialogue 161 constituent ici des moyens pour programmer le décodeur numérique par des pressions sur des touches du combiné mobile.

Dans un deuxième mode de mise en oeuvre de l'invention, l'application d'interprétation DTMF 142 n'utilise pas la mémoire de messages de dialogue 161. L'utilisateur du combiné mobile doit alors, à l'aide des touches de son combiné, composer une séquence de chiffres selon une syntaxe préalablement définie et dont il a connaissance. Par soucis de facilité d'utilisation, cette syntaxe doit être la plus simple possible. Elle peut par exemple être la suivante: deux chiffres pour désigner le jour d'enregistrement; quatre chiffres pour désigner l'heure de début d'enregistrement ; quatre chiffres pour désigner la fin de l'enregistrement ; et deux chiffres pour désigner le numéro de la chaîne à enregistrer. D'autres syntaxes peuvent être adoptées et interprétées par l'application d'interprétation DTMF 142. Par exemple, l'utilisateur a la possibilité de déclencher instantanément un enregistrement. Dans ce cas, seule la désignation de la chaîne enregistrée est nécessaire. Une syntaxe appropriée peut être par exemple la touche étoile du combiné téléphonique pour indiquer qu'il s'agit d'un enregistrement immédiat, puis deux chiffres pour désigner le numéro de la chaîne à enregistrer. De la même manière l'utilisateur peut instantanément stopper l'enregistrement au moyen d'une syntaxe appropriée.

Dans le même exemple de réalisation du dispositif selon l'invention, un utilisateur peut par ailleurs préalablement définir et mémoriser dans une unité de mémoire 162, dite unité de profil utilisateur, de la mémoire de données 110, un ensemble d'informations le caractérisant. Parmi ces informations, on peut par exemple trouver un ensemble d'émissions favorites de l'utilisateur avec leurs heures, jours et chaînes de diffusion. Le profil utilisateur peut être constitué manuellement par l'utilisateur, par exemple en désignant des émissions particulières, ou de façon plus ou moins automatique, par exemple en mémorisant systématiquement toutes les émissions d'une catégorie d'émissions préalablement désignée par utilisateur.

Lorsqu'un utilisateur équipé d'un combiné mobile d'un réseau de télécommunication cellulaire est loin de chez lui, une station de base 119 du réseau de radiotéléphonie cellulaire 120, qui échange en permanence des informations de localisation avec le combiné mobile 118 transmet une information de localisation au décodeur numérique 100. La station de base 199 constitue ici un moyen pour obtenir automatiquement une information de localisation d'un utilisateur. Cette information de localisation est interprétée par une application 143, dite application d'interprétation de localisation, de la mémoire de programmes 109. L'interprétation de localisation consiste en la comparaison entre l'information de localisation envoyée par la station de base 119 et une information de localisation 163 du décodeur contenue dans la mémoire de données 110. S'il ressort de la comparaison entre l'information de localisation émise par la station de base 119 et l'information de localisation du décodeur 163 que l'utilisateur est éloigné du décodeur, une application 144, dite d'interprétation du profil utilisateur, de la mémoire de programmes 109, est mise en oeuvre. Cette application 144 permet d'envoyer les données du profil utilisateur, correspondant à des paramètres de programmation, dans l'unité de paramètres 160 de la mémoire de données 110. Ainsi, dès qu'un utilisateur du décodeur numérique 100 n'est plus chez lui, son absence est automatiquement détectée par le réseau de radiotéléphonie cellulaire qui en informe le décodeur, ce dernier étant alors capable de programmer l'enregistrement de certaines émissions selon les informations contenues dans le profil utilisateur, et de déclencher automatiquement, éventuellement instantanément, des enregistrements du flux audio et vidéo sur le disque dur 101. En d'autres termes, lorsqu'un utilisateur est éloigné de chez lui et que sa localisation a pu être déterminée, le décodeur de télévision numérique 100 déclenche l'enregistrement d'émissions désignées par le profil utilisateur. De la même manière, lorsque l'information de localisation émise par la station de base 119 est identique à l'information de localisation du décodeur 163, les données du profil utilisateur qui avaient été transmises à l'unité de paramètre 160 sont supprimées de l'unité de paramètre 160.

Dans un deuxième exemple de réalisation de l'invention, le réseau de télécommunication utilisé dans les différentes opérations de programmation du décodeur numérique 100 est le réseau Internet 121. Les informations issues du réseau Internet peuvent parvenir au décodeur numérique 100 via l'interface de communication 116 qui comporte un modem. Là encore, un utilisateur peut programmer à distance son décodeur numérique en envoyant un message Internet via le réseau Internet auquel il a accès, par exemple depuis un ordinateur, à une adresse électronique propre au décodeur numérique 100.

La mémoire de programmes 109 comporte notamment une application 145, dite d'identification de messages de programmation, qui permet de sélectionner parmi les messages électroniques reçus les messages qui sont destinés à la programmation du décodeur numérique. A cette effet, les messages électroniques envoyés pour programmer le décodeur numérique doivent avoir une syntaxe particulière qui permet à l'application d'identification de messages de programmation de les distinguer et de déclencher le cas échéant une application 146, dite d'interprétation de messages de programmation, de la mémoire de programmes 109. L'application d'interprétation de messages de programmation 146 extrait du message électronique reçu les paramètres nécessaires à la programmation du décodeur numérique 100 et les transmet à l'unité de paramètre 160 de la mémoire de données 110 via le bus bidirectionnel de communication 112. Une syntaxe particulière peut à nouveau être prévue pour déclencher instantanément un enregistrement.

L'utilisateur a également la possibilité d'accéder au site Internet de certains opérateurs de télévision et de sélectionner les émissions qu'il souhaite enregistrer. Les paramètres de programmation sont alors envoyés automatiquement sous forme de messages électroniques vers le décodeur numérique 100. Les informations appropriées pour commander l'enregistrement sont ainsi directement accessibles sur des sites Internet spécialisés. Les messages électroniques peuvent également être envoyés, via le réseau Internet, depuis un combiné mobile 118 du réseau de radiotéléphonie cellulaire 120.

Dans un mode de réalisation préféré de l'invention, le décodeur possède dans sa mémoire de données 110 une unité de mémoire 164 qui contient un formulaire de programmation à remplir par un utilisateur qui souhaite programmer à distance le décodeur numérique 100. Une application 147, dite application d'émission, de la mémoire de programmes 109 permet d'envoyer, via le réseau Internet, des messages contenant le formulaire type de programmation 164 vers un ensemble d'appareils à partir desquels l'utilisateur est susceptible de programmer à distance le décodeur numérique 100. Ces appareils électroniques sont alors autorisés à effectuer une programmation à distance du décodeur numérique 100. L'application d'émission 147 est mise en oeuvre par l'utilisateur par exemple à l'initialisation de son décodeur numérique. L'utilisateur désigne ainsi un ensemble d'appareils électroniques vers lesquels le format type doit être envoyé. Il peut par exemple désigner son ordinateur personnel, son combiné mobile ainsi que celui d'autres personnes autorisées à programmer le décodeur numérique. L'avantage d'une telle solution est que la programmation depuis les appareils qui ont reçu le format type est plus simple et plus convivial. Aucune syntaxe particulière n'est à retenir.

Selon, un mode de réalisation perfectionné du dispositif objet de l'invention, la mémoire de données 110 peut également comporter dans une unité de mémoire 165 de la mémoire de données 110 un code secret qu'un utilisateur doit composer sur l'appareil depuis lequel il effectue la programmation à distance pour s'identifier. Si le code que l'utilisateur compose sur son appareil électronique, depuis lequel l'utilisateur tente d'effectuer la programmation, n'est pas correct, il n'a pas l'autorisation d'effectuer la programmation à distance. Selon un mode de réalisation préféré de l'invention, plusieurs codes secrets peuvent être contenus dans le module de mémoire 165, chaque code secret correspondant à un utilisateur différent. Ce mode de réalisation peut permettre d'autoriser uniquement à certains utilisateurs la programmation de certains types d'émission.

Dans un autre mode de mise en oeuvre du dispositif, l'utilisateur peut également procéder à la programmation de son décodeur numérique en se connectant sur un site spécialisé du fabricant du décodeur. En composant un numéro d'identification du décodeur, il peut alors sélectionner les émissions qu'il souhaite programmer et l'envoi des paramètres se fait automatiquement depuis ce site. Le numéro d'identification peut être un numéro de série ou tout autre code connu par l'utilisateur.

Lorsqu'un utilisateur envoie des informations de programmation depuis un combiné mobile, ou depuis un ordinateur, une clé secrète d'utilisation peut être envoyée sous la forme d'un message électronique de type EMM (Electronic Management Message dans la littérature anglaise). Le décodeur interprète alors la clé secrète au moyen d'une application 148, dite d'application d'identification de l'appareil émetteur, si l'appareil électronique depuis lequel les paramètres de programmation sont émis est autorisé à effectuer une telle opération. A cet effet, une unité de mémoire 166, dite unité d'identifiants, de la mémoire de données 110 est exploitée. L'unité de mémoire 166 comporte des informations relatives à un ensemble d'appareils autorisés à programmer le décodeur numérique 100. Cette unité de mémoire a été préalablement renseignée par l'utilisateur, par exemple au moment où il transmettait les formulaires types de programmation 164 vers ces appareils autorisés.

Le dispositif selon l'invention comprend ainsi des moyens, sous la forme d'un code secret 165, pour s'assurer de l'identité de l'utilisateur qui tente d'effectuer une programmation, et des moyens, sous la forme d'identifiants de clé secrète, pour s'assurer que l'appareil depuis lequel on tente d'effectuer une opération de programmation est un appareil autorisé. Ces deux modes de protection peuvent être mis en oeuvre séparément ou simultanément. Leur mise en oeuvre peut éventuellement être supprimée dans certains modes de réalisation du dispositif 100.

## Revendications

1. Dispositif d'enregistrement de signaux issus d'un flux audio et vidéo dans un appareil (100) de réception d'informations audio et vidéo comprenant:
- un module de mémoire (101) pour mémoriser un ensemble de signaux audio et vidéo ;
- une mémoire de programmes (109) comprenant un ensemble d'applications (140 ; 141 ; 142 ; 143 ; 144 ; 145 ; 146 ; 147 ; 148) ;
- un microprocesseur (111) pour gérer notamment le fonctionnement de la mémoire de programmes ;
- une interface de communication (116) ;
- des moyens de programmation distants pour commander par un envoi d'informations appropriées, via un réseau de télécommunication de type réseau de radiotéléphonie cellulaire (120), un enregistrement d'un ensemble de signaux du flux audio et vidéo,
**caractérisé en ce que**
- le réseau de radiotéléphonie cellulaire comprenant des moyens (119) pour obtenir automatiquement une information de localisation d'un utilisateur, et des moyens (120) pour transmettre cette information au dispositif ;
- le dispositif comprend par ailleurs des moyens (143; 163) pour interpréter cette information de localisation afin de déterminer si l'utilisateur est éloigné du dispositif, et des moyens (140; 141) pour déclencher automatiquement des enregistrements du flux audio et vidéo sur le module de mémoire (101) lorsque l'utilisateur est éloigné du dispositif.

2. Dispositif d'enregistrement selon la revendication 1 **caractérisé en ce que** le réseau de radiotéléphonie cellulaire utilisé pour la programmation à distance du dispositif est accessible par un utilisateur au moyen d'un combiné mobile (118).

3. Dispositif d'enregistrement selon la revendication 2 **caractérisé en ce qu'**il comprend des moyens (142; 161) pour programmer des opérations d'enregistrement par des pressions sur des touches du combiné mobile (118).

4. Dispositif d'enregistrement selon l'une des revendications précédentes **caractérisé en ce qu'**il comprend une unité de mémoire (162) pour mémoriser un profil d'utilisateur qui détermine, au moyen d'une application d'interprétation du profil utilisateur, le déclenchement automatique des enregistrements du flux audio et vidéo.

5. Dispositif d'enregistrement selon une des revendications précédentes **caractérisé en ce que** les informations appropriées pour commander l'enregistrement sont également directement accessibles sur des sites Internet spécialisés, et sont envoyées via un réseau de type réseau Internet (121) accessible par un utilisateur au moyen d'un ordinateur ou d'un combiné mobile du réseau de radiotéléphonie cellulaire.

6. Dispositif d'enregistrement selon la revendication précédente **caractérisé en ce qu'**il comprend des moyens (147) pour envoyer, via le réseau Internet, vers un ensemble d'appareils électroniques, autorisés à effectuer une programmation distante du dispositif, des messages contenant un formulaire type de programmation mémorisé dans une unité de mémoire (164) d'une mémoire de données (110).

7. Dispositif d'enregistrement selon une des revendications précédentes **caractérisé en ce qu'**il comprend dans une mémoire de données (110) un code secret (165) pour s'assurer de l'identité de l'utilisateur.

8. Dispositif d'enregistrement selon une des revendications précédentes **caractérisé en ce qu'**il comprend une application d'identification d'un appareil émetteur pour identifier, suite à la réception par le dispositif d'une clé secrète émise par le moyen de programmation distant, le moyen de programmation distant et pour vérifier s'il est autorisé à effectuer une opération de programmation.

## Claims

1. Recording device for recording signals from an audio and video stream in an apparatus (100) for receiving audio and video information, comprising:
- a memory module (101) for memorizing a set of audio and video signals;
- a program memory (109) comprising a set of applications (140; 141; 142; 143; 144; 145; 146; 147; 148) ;
- a microprocessor (111) notably for managing the operation of the program memory;
- a communication interface (116);
- distant programming means for controlling, by sending appropriate information, through a telecommunication network of a cellular radiotelephone network (120) type, a record of a set of signals of the audio and video stream;
**characterized in that**
- the cellular radiotelephone network comprising means (119) for automatically obtaining a piece of user localization information, and means (120) for transmitting this piece of information to the device;
- the device further comprises means (143; 163) for interpreting this piece of localization information in order to determine whether the user is distant from the device and means (140; 141) for automatically starting recording operations for the audio and video stream into the memory module (101) when the user is distant from the device.

2. Recording device according to claim 1, **characterized in that** the cellular radiotelephone network used for the distant programming of the device is accessible by a user by means of a mobile handset (118).

3. Recording device according to claim 2, **characterized in that** it comprises means (142; 161) for programming recording operations by pressing keys of the mobile handset (118).

4. Recording device according to anyone of the preceding claims, **characterized in that** it comprises a memory unit (162) for memorizing a user profile which determines, by means of an interpretation application for the user profile, the automatic start of recording operations for the audio and video stream.

5. Recording device according to anyone of the preceding claims, **characterized in that** the appropriate information for the recording control are also directly accessible from specialized websites, and are sent through a network of Internet network (121) type accessible by a user by means of a computer or a mobile handset of the cellular radiotelephone network.

6. Recording device according to the preceding claim, **characterized in that** it comprises means (147) for sending, through the Internet network, to a set of electronic apparatuses, authorized to perform a distant programming of the device, messages containing a standard programming form memorized in a memory unit (164) of a data memory (110).

7. Recording device according to anyone of the preceding claims, **characterized in that** it comprises a secret code (165) in a data memory (110) in order to make sure of the user identity.

8. Recording device according to anyone of the preceding claims, **characterized in that** it comprises an identification application for a sending apparatus for identifying the distant programming means after the reception, by the device, of a secret key sent by the distant programming means, and for checking whether it is authorized to perform a programming operation.

## Patentansprüche

1. Registriervorrichtung zum Registrieren von Audio- und Videosignalen in einem Empfangsgerät (100) für Audio- und Videoinformationen, umfassend:
- einen Speicherungsbaustein (101) zum Speichern eines Audio- und Videosignalrahmens;
- eine Programspeicherung (109), die eine Anwendungsgruppe (140; 141; 142; 143; 144; 145; 146; 147; 148) enthält;
- einen Mikroprozessor (111) insbesondere zum Verwalten der Wirkungsweise der Programspeicherung;
- eine Kommunikationsschnittstelle (116);
- entfernte Programmiermittel zum Bedienen einer Registrierung eines Signalrahmens des Audio- und Videoflusses mittels einer geeigneten Informationssendung durch ein Telekommunikationsnetzwerk wie ein zellulares Radiotelephonnetzwerk (120),
**dadurch gekennzeichnet, dass**
- das zellulare Radiotelephonnetzwerk Mittel (119) zum automatischen Erhalten einer Benutzerlokalisationsinformation und Mittel (120) zur Übertragung dieser Information zur Vorrichtung umfasst,
- die Vorrichtung Mittel (143; 163) zum Interpretieren dieser Lokalisationsinformation, um zu feststellen, ob der Benutzer von der Vorrichtung entfernt ist, und Mittel (140; 141) zum automatischen Starten von Registrierungen des Audio-und Videoflusses im Speicherungsbaustein (101) bei einer Entfernung des Benutzers von der Vorrichtung überdies umfasst.

2. Registriervorrichtung nach Anspruch 1, **dadurch gekennzeichnet, dass** das zellulare, für die Fernprogrammierung der Vorrichtung verwendete Radiotelephonnetzwerk mittels eines Mobilhandgerätes (118) benutzerzugänglich ist.

3. Registriervorrichtung nach Anspruch 2, **dadurch gekennzeichnet, dass** sie Mittel (142; 161) zum Programmieren von Registrieroperationen durch Drücken von Tasten des Mobilhandgeräts (118) umfasst.

4. Registriervorrichtung nach einem der vorhergehenden Ansprüche, **dadurch gekennzeichnet, dass** sie eine Speicherungseinheit (162) zum Speichern eines Benutzerprofiles umfasst, welches das automatische Starten von Registrierungen des Audio- und Videoflusses mittels einer Interpretationsanwendung für das Benutzerprofil feststellt.

5. Registriervorrichtung nach einem der vorhergehenden Ansprüche, **dadurch gekennzeichnet, dass** die für die Bedienung der Registrierung geeigneten Informationen auch unmittelbar an spezialisierte Websites zugänglich sind, und durch ein Netzwerk wie ein Internetnetzwerk (121) gesandt werden, welches mittels eines Computers oder eines Mobilhandgerätes des zellularen Radiotelephonnetzwerkes benutzerzugänglich ist.

6. Registriervorrichtung nach dem vorhergehenden Anspruch, **dadurch gekennzeichnet, dass** sie Mittel (147) zum Senden von ein in einer Speicherungseinheit (164) einer Datenspeicherung (110) gespeichertes Typprogrammierformular enthaltenden Nachrichten durch das Internetnetzwerk zu einer elektronischen, zum Fernprogrammieren der Vorrichtung erlaubten Gerätegruppe umfasst.

7. Registriervorrichtung nach einem der vorhergehenden Ansprüche, **dadurch gekennzeichnet, dass** sie eine Geheimschlüssel (165) in der Datenspeicherung (110) umfasst, um die Benutzerpersonalien zu überprüfen.

8. Registriervorrichtung nach einem der vorhergehenden Ansprüche, **dadurch gekennzeichnet, dass** sie eine Erkennungsanwendung für einen Sendgerät umfasst, um nach dem Empfang einer vom Fernprogrammiermittel gesandten Geheimschlüssel das Fernprogrammiermittel zu identifizieren, und zu überprüfen, ob dieses erlaubt ist, eine Programmieroperation durchzuführen.
